# EUROPEAN PATENT APPLICATION

(11) **EP 3 511 525 A1**
(43) Date of publication of application: **17.07.2019**
(21) Application number: 18212838.9
(22) Date of filing: 17.12.2018
(51) Int. Cl.: F01D 5/30, F01D 11/00, F02K 3/06, F04D 29/32

(54) **ANNULUS FILLER FOR THE FAN OF A GAS TURBINE ENGINE AND CORRESPONDING GAS TURBINE ENGINE**

(30) Priority: 16.01.2018 GB 201800647
(71) Applicant: Rolls-Royce plc, London SW1E 6AT (GB)
(72) Inventor: Curren, Matthew, Derby, Derbyshire DE24 8BJ (GB); Hoyland, Matthew, Derby, Derbyshire DE24 8BJ (GB)
(74) Representative: Rolls-Royce plc

(57) **Abstract**

Gas turbine engine comprising a fan with an annulus filler (32, 132) for mounting on a rotor disc (24, 124) of fan (13, 113) (10), the annulus filler (32, 132) including a top wall (42, 142) arranged to bridge a circumferential gap (34) between two adjacent fan blades (26, 126) extending from the rotor disc (24, 124), along an axial length of the fan blades (26, 126), wherein the top wall (42, 142) is arranged to define an airflow surface (36, 136) for air being drawn between the two adjacent fan blades (26, 126) in an axial direction, from a first end (30a, 130a) of the fan (13, 113), to a second end (30b, 130b) of the fan (13, 113); wherein the annulus filler (32, 132) defines a volume (68, 168) beneath the top wall (42, 142); and wherein the annulus filler (32, 132) further includes an end wall (70, 170) arranged to close the volume (68, 168) at the second end (30b, 130b) of the fan (13, 113), to form a windage shield.

## Description

The present disclosure relates to an annulus filler for mounting on a rotor disc of a fan of a gas turbine engine, a fan of a gas turbine engine, and a gas turbine engine.

Gas turbine engines include a fan at the front of the engine. The fan comprises a plurality of radially extending blades mounted on a rotor disc which rotates about an axis. To ensure a radially smooth inner surface for air as it passes over the rotor disc, annulus fillers can be used to bridge the gap between adjacent blades. The fan is used as a first compression stage for air passed to a combustor, and to direct air passing through a by-pass to provide thrust. Further compression stages for the air provided to the combustor may also use rotating fans, having a plurality of blades extending from a hub.

Rotation of a fan causes a pressure differential to be generated in the space between the annulus filler and the rotor disc, with higher pressure air located at the position radially furthest form the axis of rotation, and lower pressure air located at the position radially closest to the axis of rotation. Depending on the specific configuration of adjacent hardware in the engine, the air behind the fan is stationary and so lower pressure than the air under the annulus filler. At a radially outward position, the higher pressure air moves from under the annulus filler, into the low pressure region rearwards of the annulus filler. To replace this air, new air is drawn into the area under the annulus filler, at a radially inward region. This sets up a recirculation which can reduce engine efficiency.

To prevent recirculation, it is known to provide a separate radially extending shield, known as a windage shield. The windage shield is mounted from the fan disc, and extends behind the fan disc and the annulus filler. The windage shield may also include a lid that helps form a smooth inner radial airflow surface and retain the annulus filler against radial (centrifugal) forces.

According to a first aspect, there is provided an annulus filler for mounting on a rotor disc of a fan of a gas turbine engine, the annulus filler including a top wall arranged to bridge a circumferential gap between two adjacent fan blades extending from the rotor disc, along an axial length of the fan blades, wherein the top wall is arranged to define an airflow surface for air being drawn between the two adjacent fan blades in an axial direction from a first end of the fan to a second end of the fan; wherein the annulus filler defines a volume beneath the top wall; and wherein the annulus filler further includes an end wall arranged to close the volume at a second end of the fan, to form a windage shield.

With the annulus filler of the first aspect, a single component can be used to provide a annular air flow surface and windage shield, e.g. the windage shield can be integrally formed with the annulus filler. This reduces the number of parts in a fan, making the fan (and hence the engine) simpler to make, saving cost and reducing weight. In addition, using an end wall of an annulus filler to form the windage shield allows the windage shield to be more closely aligned with the edge of the fan blade. The edge of the fan blade denotes the boundary between the rotating air and stationary air. Therefore, aligning the windage shield with the edge of the fan blade provides improved reduction of recirculation.

The annulus filler may include support portions arranged to support the end wall along its height. This prevents distortion of the end wall, which would reduce its effectiveness as a windage shield.

The annulus filler may include mounting portions arranged to mount the annulus filler from the rotor disc. The support portions may be formed in at least one of the mounting portions. A first mounting portion may include: a pair of circumferentially spaced sidewalls extending from the top wall. The sidewalls may extend axially to the second end of the fan to form the support portions. The annulus filler may include apertures formed in the sidewalls. The apertures reduce the amount of material used, providing weight savings.

The annulus filler may include seals provided between axial surfaces of the fan blades, and radially extending edges of the end wall. The seals help to separate the rotating air from the stationary air, further reducing recirculation.

According to a second aspect there is provided a fan for a gas turbine engine, the fan arranged to rotate about an axis and extending along the axis of rotation from a first end to a second end, the fan having: a rotor disc extending along the axis; a plurality of fan blades arranged around the circumference of the rotor disc, each fan blade extending radially outward from the rotor disc and extending along the axis; and one or more annulus fillers according to the first aspect.

Since the annulus filler forms the windage shield, a single component can be used to provide the annular air flow surface and windage shield. This reduces the number of parts in the fan, making it simpler to make, saving cost and reducing weight. In addition, using the end wall of an annulus filler to form the windage shield allows the windage shield to be more closely aligned with the edge of the fan blade. The edge of the fan blade denotes the boundary between the rotating air and stationary air. Therefore, aligning the windage shield with the edge of the fan blade provides improved reduction of recirculation.

The end wall may be aligned with the rear edge of the fan blades. The end wall may be considered to be axially coincident with the rear edge of the fan blades.

The rotor disc may include an annular plate extending around the axis, and fixed to a body of the rotor disc at the second end of the fan. The addition of an annular plate can help balance the rotor disc, helping to reduce differential radial growth between the front and rear of the disc, and improve stiffness.

The annular plate may include a plurality of projections. Each projection may be arranged to engage with a corresponding projection formed on a one of the one or more annulus fillers, to mount the annulus filler to the rotor disc. Using the annular plate to mount the annulus filler means a separate mounting structure is not needed.

The rotor disc may include a plurality of radial slots, extending along the axis. Each fan blade may include a root portion. Each root portion may engage with a slot to couple the fan blade to the rotor disc. The annular plate may close an end of the slot at the second end of the fan. Using the annular plate to close the slots and thus retain the fan blades provides a fan with reduced complexity. Furthermore, using a single annular plate provides improved hoop continuity, reducing differential radial growth between the front and rear of the disc and other distortion of the disc, as the plate is continuous around the axis.

According to a third aspect, there is provided a gas turbine engine including the fan of the second aspect.

Using an annulus filler that also forms a windage shield means that separate windage shields and annulus fillers are no longer required. This reduces the number of parts in the engine, making the engine simpler to make, saving cost and reducing weight. In addition, using the end wall of an annulus filler to form the windage shield allows the windage shield to be more closely aligned with the edge of the fan blade. The edge of the fan blade denotes the boundary between the rotating air and stationary air. Therefore, aligning the windage shield with the edge of the fan blade provides improved reduction of recirculation.

The top wall of the annulus filler may include: a first lip formed at the first end of the fan; and a second lip formed at the second end of the fan, wherein the engine includes a spinner fairing or nose cone adjacent a first end of the fan, and a static seal mounted from a stationary part of the engine adjacent a second end of the fan; wherein the first lip extends under the spinner fairing or nose cone; and the second lip extends under the static seal.

In a further aspect there is provided a fan for a gas turbine engine, the fan arranged to rotate about an axis and extending along the axis from a first end to a second end, the fan having: a rotor disc extending along the axis; a plurality of fan blades arranged around the circumference of the rotor disc, each fan blade extending radially outward from the rotor disc and extending along the axis and having a rear edge; and one or more annulus fillers mounted on the rotor disc between adjacent fan blades wherein the one or more annulus fillers comprises a top wall that bridges a circumferential gap between two adjacent fan blades so as to define an airflow surface for air being drawn between the two adjacent fan blades in an axial direction, from a first end of the fan, to a second end of the fan; wherein the annulus fillers define a volume beneath the top wall; and wherein the annulus filler includes an end wall that defines a windage shield that is aligned with the rear edge of the fan blades so as to close the volume at the second end of the fan.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2A** is a sectional side view of fan including an annulus filler, according to a first embodiment of the disclosure;
**Figure 2B** is a rear view of the fan of Figure 2A;
**Figure 3** is an exploded perspective view of the annulus filler of Figure 2A; and
**Figure 4** is a sectional side view of fan including an annulus filler according to a second embodiment of the disclosure.

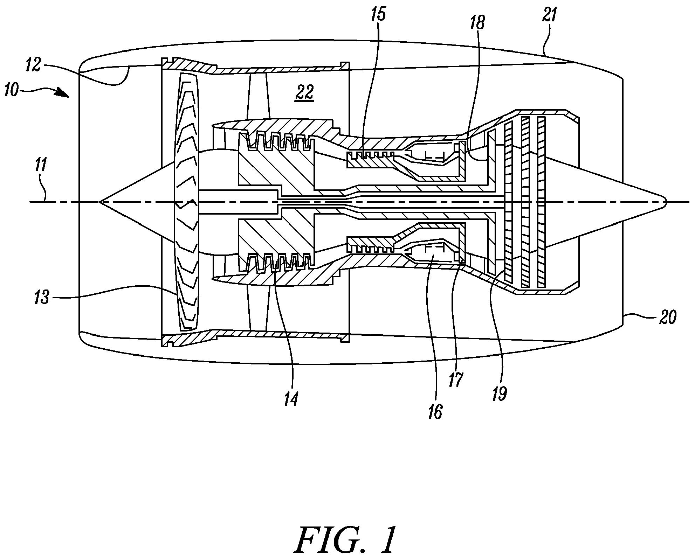

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

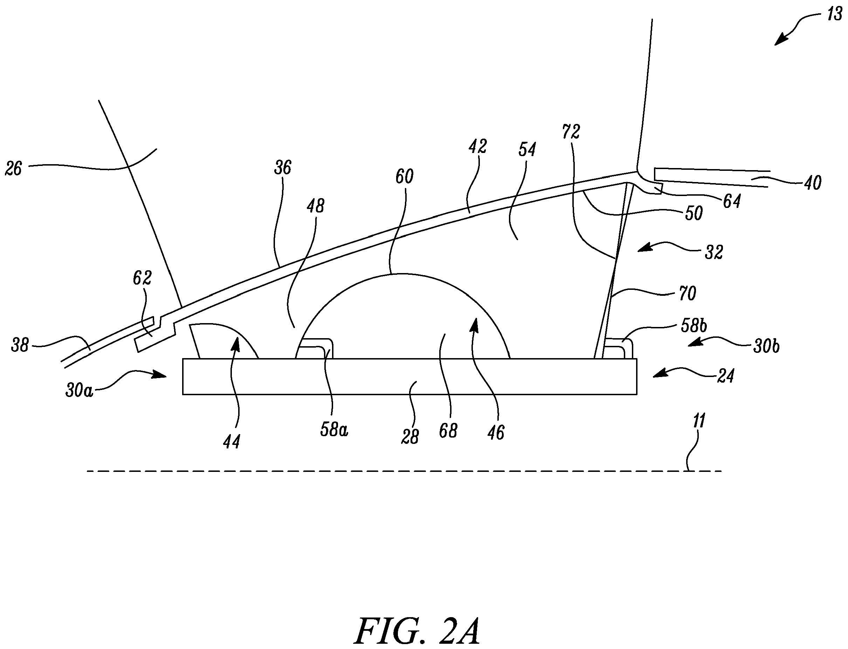

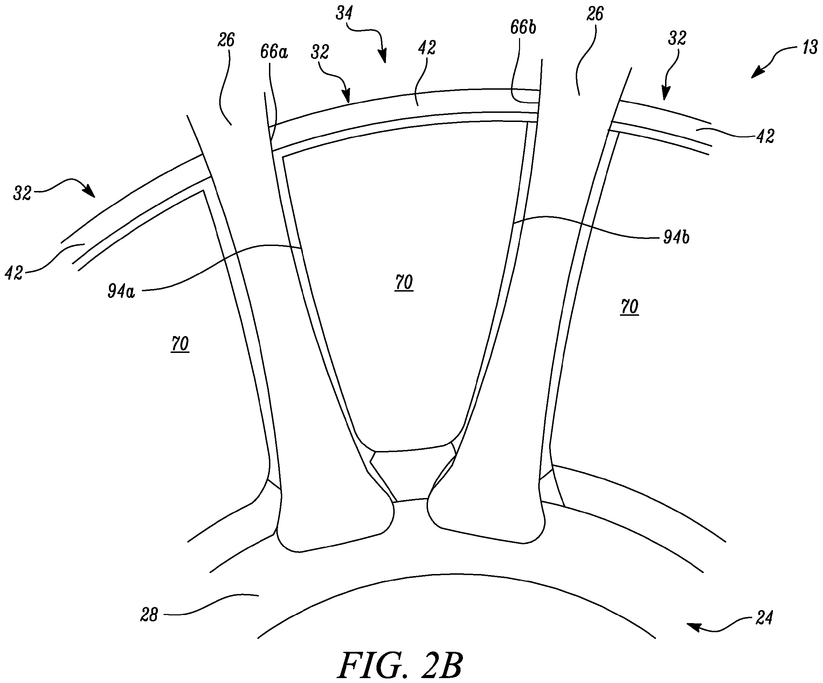

Figures 2A and 2B schematically illustrate a portion of the propulsive fan 13 of a gas turbine engine 10. The fan 13 includes a central rotor disc 24, and a plurality of fan blades 26 extending from the disc 24.

The disc 24 has an annular body 28 arranged around the axis of rotation 11, with a length extending along the axis 11 to form a cylinder. The blades 26 extend radially outward from the disc 24 (with respect to the axis of rotation 11) and also have a length extending along the axis of rotation 11.

In use, air is drawn through the fan 13, in a direction from a first end 30a (front or upstream end) to a second end 30b (rear or downstream end). Annulus fillers 32 are mounted on the disc 24, in the gaps 34 between adjacent blades 26, and provide a smooth surface 36 for air to pass over, as it passes through the fan 13. The annulus fillers 32 have a length extending along the axis of rotation 11, and a width extending circumferentially around it.

The annulus filler 32 forms part of a radial airflow surface 36, over which air moving through the engine 10 passes, in operation. In front of the fan 13 the airflow surface 36 is formed by a nose cone or spinner fairing 38, and behind the fan 13, the airflow surface continues over a static seal 40, leading on to the further stages of the engine 10 (such as the compressor stages 14, 15 or bypass duct 22).

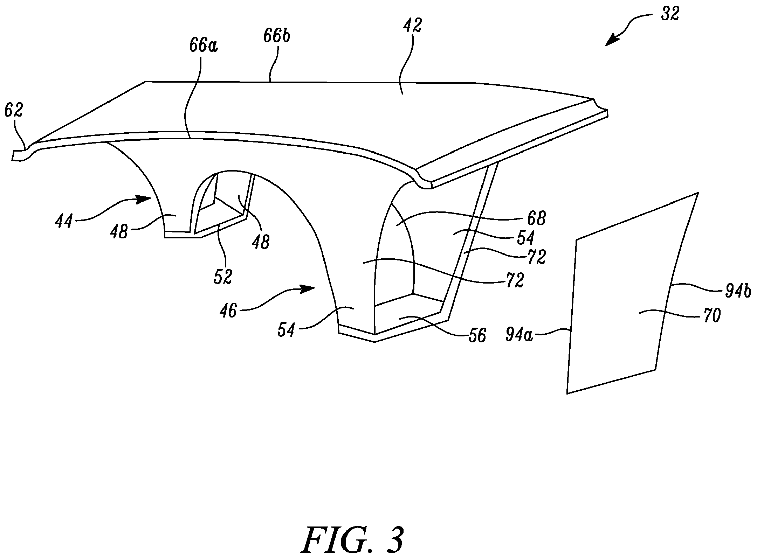

Figure 3 shows an exploded view of the annulus filler 30. The annulus filler 32 will now be described in more detail, with reference to Figures 2A, 2B and 3.

The annulus filler 32 includes a top wall 42 (also referred to as a lid) which defines the portion of the airflow surface 36 formed by the fan 13. The top wall 42 is inclined such that radial spacing between the top wall 38 and the disc 24 increases along the length of the fan 13, towards the second end 30b. This ensures a smooth airflow surface 36 from the nose cone or spinner fairing 38, through to the static seal 40.

The annulus filler 32 is secured to the disc 24 by front and rear mounting portions 44, 46, spaced axially along the length of the annulus filler 32.

The front mounting portion 44 includes a pair of sidewalls 48 spaced circumferentially with respect to the axis of rotation 11, and extending radially downward from an underside 50 of the top wall 42, towards the disc 24. At the lower end of the sidewalls 48 (the end opposite the top wall 42), they are joined by a cross member 52. The cross member 52 may extend circumferentially around the axis of rotation 11, or may extend flat, such that it follows a chord around the axis of rotation 11.

Similarly, the rear mounting portion 46 includes a pair of sidewalls 54 spaced circumferentially with respect to the axis of rotation 11, and extending radially downward from the underside 50 of the top wall 42, towards the disc 24. Again, at the lower end of the sidewalls 54 (the end opposite the top wall 42), they are joined by a cross member 56. The cross member 56 may extend circumferentially around the axis of rotation 11, or may extend flat, such that it follows a chord around the axis of rotation 11.

Between the mounting portions 44, 46 the sidewalls 48 of the front portion 44 join the sidewalls 54 of the rear mounting portion 46 to form an arch 60.

The disc 24 is formed with a pair of hooking projections 58a, 58b, spaced axially along its length. The hooking projections 58a, 58b are sized and spaced to engage with the cross members 52, 56 of the mounting portions 44, 46, to hold the annulus filler 32 in place. It will be appreciated that similar hooking projections 58a, 58b are provided around the disc 24, for each annulus filler 32 in each gap 34 between adjacent blades 26.

A front lip 62 is provided at the front of the top wall 42, to fit under the spinner fairing or nose cone 38, and a rear lip 64 is provided at the rear of the top wall 42, to fit under the static seal 40. The front lip 62 acts to further retain the annulus filler 32, preventing lifting away from the disc 24 by centrifugal forces. The rear lip 64 may also act to retain the annulus filler 32, although in typical use, the rear lip 64 will not contact the static seal 40. The front and rear lips 62, 64 also act to provide a continuation of the annular airflow surface.

The sides 66a,b of the top wall 42 may be provided with seals (not shown), to form a seal with the sides of the adjacent fan blades 26.

A volume 68 is formed by the annulus filler 32, in the space underneath the top wall 42. The volume 68 is closed at the sides by the fan blades 26. The air under the annulus filler 32 is rotating, and so, during operation, a radial pressure differential exists. At the rear end 30b of the disc 24, the volume 68 is open into the space under the static seal 40. The static seal 40 is fixed to a non-rotating part of the engine 10, and so the air underneath the static seal 40 is stationary. The pressure differential under the annulus filler 32 causes air circulation between the volume 68 under the annulus filler 32 and the air under the static seal 40.

To reduce or prevent recirculation, the annulus filler 32 is provided with an end wall 70. The end wall 70 extends form the underside 50 of the top wall 42. The end wall 70 has a radial height extending downward from the top wall 42, to the disc 24. The end wall 70 also extends across the circumferential gap 34 between adjacent blades 26, such that the rear end of the volume 68 under the annulus filler 32 is closed off. The end wall 70 is arranged to align with the rear edge (also referred to as trailing edge) of the fan blades 26. Therefore, the end wall 70 separates the stationary air from the rotating air, stopping circulation.

The sidewalls 54 of the rear mounting portion 46 extend towards the rear end of the annulus filler 32, so that the end wall 70 is supported along its radial height. The rear ends of the sidewalls 54 thus form a support portion 72 for the end wall. The sidewalls 54 may be said to join directly to the end wall 70 and/or be continuous with the end wall 70.

At the front end 30a of the fan 13, the volume is open into a volume defined by the nose cone or spinner fairing 38. The air in this front volume is also rotating, and so no pressure recirculation is set up.

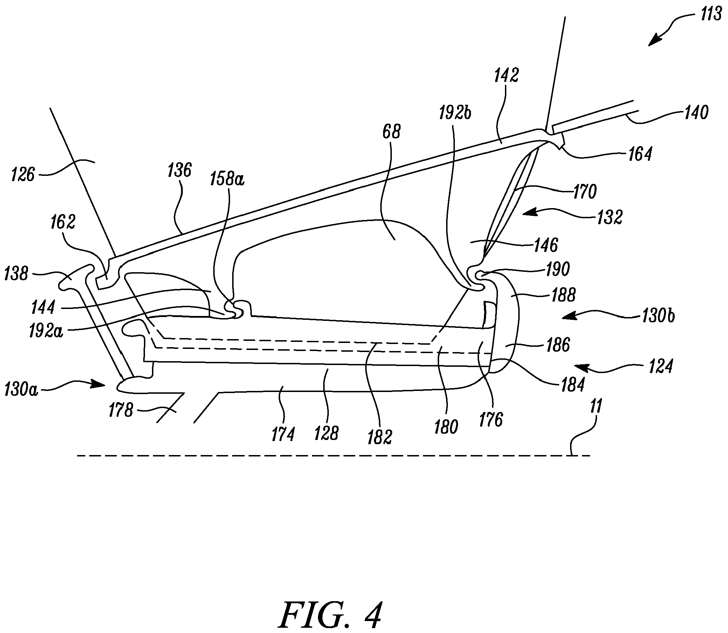

Figure 4 illustrates a fan 113 according to a second embodiment of the disclosure. The fan 113 of the second embodiment is similar to the fan 13 of the first embodiment, unless stated otherwise, and so similar reference numerals will be used for similar features.

As with the first embodiment, the fan 113 of the second embodiment includes a central rotor disc 124, and a plurality of fan blades 126 extending from the disc 124. Annulus fillers 132 are provided to form a part of the airflow surface 136 as air passes through the fan 113. The annulus filler 132 includes a top wall 142 to form the airflow surface 136, and an end wall 170 to provide a divide between still air behind the fan 113, and rotating air in the volume 168 underneath the annulus filler 132, to prevent air circulation.

In the fan 113 of the second embodiment, the disc 124 is formed of a body 128 having an inner body part 174 and an outer body part 176 arranged concentrically with the inner body part 174. The inner body part 174 is coupled to a drive shaft or drive mechanism (not shown) through a linkage 178 provided towards the front of the disc 124. The nose cone or spinner fairing 138 is also mounted from the front of the inner body part 174.

The outer body part 176 is arranged around (radially outside) the inner body part 174. The body parts 174, 176 are coupled by any suitable means, such that when the inner body part 174 is rotated via the linkage 178, the outer body part 176 also rotates.

The outer body part 176 includes a number of slots 180 (shown in dashed lines) extending along the length of the disc 124, in towards the rotational axis 11. The slots 180 are used to secure the blades 126 to the disc 124 by fixing blade roots 180 (also shown in dashed lines) into the slots. The slots 180 may be shaped to prevent radial movement of the blades 126, and may have on open end on at least the rear end 184 of the disc 124.

It will be appreciated that a similar root and slot mechanism may be used in relation to the first embodiment, although this is not shown in the Figures for clarity. In the first embodiment, shear plates (not shown) may be fixed over the rear 184 (and front) ends of the slots to prevent axial movement of the blades.

In the second embodiment, a backing plate 186 is provided at the rear end 130b of the fan 113. The backing plate 186 is annular, extending around the rotational axis 11. In the radial direction, the backing plate 186 extends over the ends of the inner body part 174 and the outer body part 176, and includes a portion 188 extending radially outward from the disc 124.

The backing plate 186 is used to prevent axial movement of the blade roots 182 out of the slots 180 in a rearward direction. Where the slot 180 has an open end at the front 130a of the disc, a separate annular plate (not shown), individual shear plates, or any other mechanism may be used to close the slot 180.

The material and mass of the backing plates 186 may also be selected to help balance the disc against differential radial growth between the front and rear of the disc (i.e. the front of the disc experiences different forces and distortion to the rear of the disc), as a result of variation in forces along the length of the disc 124 because the linkage 178 is coupled near the front end 130a of the disc. This is further assisted by the backing plate 186 being formed by a single continuous hoop, thereby providing hoop continuity against radial deformation of the disc 124.

A hooking projection 190 is formed at the radially outward end of the extended projection 188 of the backing plate 186. The hooking projection 190 engages with the rear mounting portion 146 of the annulus filler 132, to help retain the annulus filler 132 against radial movement. Therefore, the backing plate 186 may also be used to secure the annulus filler 132 to the disc 124. A number of hooking projections 190 may be provided around the circumference of the backing plate 186, to allow a number of annulus fillers 132 to be mounted on the disc 124.

Further mechanisms of mounting the annulus filler 132 to the disc 124 may be similar to the first embodiment. For example, a front mounting portion 144 may be provided on the annulus filler 132, to engage a front hooking projection 158a provided on the outer body part 176 of the disc 124. Furthermore, the annulus filler 132 may include a front lip 162 and a rear lip 164, as in the first embodiment.

In the fan 113 according to the second embodiment, the weight of the disc 124 is increased by the backing plate 186. However, this increase in weight is approximately offset by the reduction in weight due to the removal of the separate windage shield and shear plates.

In some examples, a second backing plate (not shown) may also be provided at the front end 130a of the disc 124. This plate may also be an annular plate, and may include hooking projections for engaging the front support portion 144 of the annulus filler 132.

The annulus fillers 32, 132 discussed above may be formed of any suitable material. For example, the annulus fillers 32, 132 may be made of metallic or composite materials. Furthermore, the annulus filler 32, 132 may be made in any suitable way. For example, the annulus filler 32, 132 may be cast or moulded. The annulus filler 32, 132 may be formed in several parts, which are then bonded or fixed together, to provide the completed component.

In further embodiments, the end wall 70, 170 may optionally include seals (not shown) on its radially extending sides 94a,b. The seals may be arranged to engage the faces of the blades 26, 126, to help close off the volume 68, 168 underneath the annulus filler 32, 132.

In some embodiments, the end wall 70, 170 may directly align with the rear end of the blades 26, 126, and the seals (where present) may project out form the sides 94a,b of the end wall 70, 170, or behind the end wall 70, 170. In other embodiments, the end wall 70, 170 may be approximately aligned with the end of the blades 26, 126, but slightly inside or outside the volume 68, 168 under the annulus filler 32, 132. In these cases, there will either be a small volume of air that is in front of the rear edge of the fan blades 26, 126 but outside the end wall 70, 170, or a small volume of air behind the rear edge of the fan blades 26, 126 but within the end wall 70, 107. In either case, recirculation may still occur, but the recirculation will be considered negligible.

Furthermore, in these examples, the seals may be positioned accordingly (where present).

In yet further embodiments, the sidewalls 48, 54 of the front and/or rear mounting portions 44, 144, 46, 146 may include apertures extending there-through. These apertures reduce the overall weight of the annulus filler 32, whilst maintaining sufficient structure strength.

In the embodiments discussed above, the sidewalls 54 of the rear mounting portion 46, 146 of the annulus filler 32, 132 are extended backwards to the rear end 30b, 130b of the fan 13, 113, to provide support for the end wall 70, 170 along its radial height. It will, however, be appreciated that the end wall 70, 170, may be supported in any suitable manner. For example, projections may extend form the sidewalls 54, rather than the whole sidewall 54 being extended to the end wall 70, 170. Alternatively a separate support structure may be provided, independent of the rear mounting portion 46, 146.

In the example shown in Figure 4, viewed in cross section along the axis of rotation 11, the radially inward end of the mounting portions 144, 146 includes a hook shaped projections 192,a,b arranged to engage with the front hooking projection 158a on the disc 124, and the hooking projection 190 on the backing plate 186. This is in contrast to the first embodiment, shown in Figures 2A, 2B and 3, where the mounting portions 44, 46 have a hoop shape that engages with the hooking projections 58a, 58b on the disc 24.

It will be appreciated that these are simply two different examples of how the annulus filler 32, 132 can be mounted from the disc 24, 124. Either example may be used in either embodiment. Furthermore, any suitable arrangement of inter-engaging projections may be used to couple the mounting portions 44, 46, 144, 146 and the disc 24, 124.

The embodiments discussed above are given by way of example only. The annulus filler 32, 132 may have any suitable shape and structure, and the disc 24, 124 and fan 13, 113 may also have any suitable structure.

Furthermore, although the above examples have been described in relation to a fan having separately formed disc 24, 124 and blades 26, 126, the fan may instead be an integrated disc, where the disc 24, 124 and blades 26, 126 are formed as a single unit (also referred to as a blisk).

The above examples have been discussed in relation to the propulsion fan 13 of a turbine engine. However, it will be appreciated that the fan may be within other stages of a gas turbine engine, or any other fan system requiring a smooth airflow path.

It will be understood that the invention is not limited to the embodiments above-described and various modifications and improvements can be made without departing from the concepts herein. Except where mutually exclusive, any of the features may be employed separately or in combination with any other features and the disclosure extends to and includes all combinations and sub-combinations of one or more features described herein.

## Claims

1. An annulus filler (32, 132) for mounting on a rotor disc (24, 124) of fan (13, 113) of a gas turbine engine (10), the annulus filler (32, 132) including a top wall (42, 142) arranged to bridge a circumferential gap (34) between two adjacent fan blades (26, 126) extending from the rotor disc (24, 124), along an axial length of the fan blades (26, 126),
wherein the top wall (42, 142) is arranged to define an airflow surface (36, 136) for air being drawn between the two adjacent fan blades (26, 126) in an axial direction, from a first end (30a, 130a) of the fan (13, 113), to a second end (30b, 130b) of the fan (13, 113);
wherein the annulus filler (32, 132) defines a volume (68, 168) beneath the top wall (42, 142); and
wherein the annulus filler (32, 132) further includes an end wall (70, 170) arranged to close the volume (68, 168) at the second end (30b, 130b) of the fan (13, 113), to form a windage shield.

2. The annulus filler (32, 132) of claim 1, wherein the end wall is provided at a position such that it is aligned with the rear edge of the fan blades when mounted on the rotor disc.

3. The annulus filler (32, 132) of claim 1 or 2, including:
support portions (72) arranged to support the end wall (70, 170) along its height.

4. The annulus filler (32, 132) of claim 3, wherein the annulus filler (32, 132) includes:
mounting portions (44, 46, 144, 146) arranged to mount the annulus filler (32, 132) from a rotor disc (24, 124),
wherein the support portions (72) are formed in at least one of the mounting portions (44, 46, 144, 146).

5. The annulus filler (32, 132) of claim 4, wherein a first mounting portion (46, 146) includes:
a pair of circumferentially spaced sidewalls (54) extending from the top wall (42, 142), wherein the sidewalls (54) extend axially to the second end (30b, 130b), to form the support portions (72).

6. The annulus filler (32, 132) of claim 5, wherein the annulus filler (32, 132) includes apertures formed in the sidewalls (48).

7. The annulus filler (32, 132) of any preceding claim, wherein the annulus filler (32, 132) includes seals provided between axial surfaces of the fan blades (26, 126), and edges (94a,b) of the end wall (70, 170).

8. A fan (13, 113) for a gas turbine engine (10), the fan (13, 113) arranged to rotate about an axis (11) and extending along the axis (11) from a first end (30a, 130a) to a second end (30b, 130b), the fan (13, 113) having:
a rotor disc (24, 124) extending along the axis (11);
a plurality of fan blades (26, 126) arranged around the circumference of the rotor disc (24, 124), each fan blade (26, 126) extending radially outward from the rotor disc (24, 124) and extending along the axis (11) and having a rear edge; and
one or more annulus fillers (32, 132) as claimed in any preceding claim, mounted on the rotor disc (24, 124) between adjacent fan blades (26, 126).

9. The fan (13, 113) of claim 7, wherein the end wall is aligned with the rear edge of the fan blades.

10. The fan (13, 113) of claim 7, wherein the rotor disc (24, 124) includes an annular plate (186) extending around the axis (11) and fixed to a body (28, 128) of the rotor disc (24, 124) at the second end (30b, 130b) of the fan (13, 113).

11. The fan (13, 113) of claim 8, wherein the annular plate (186) includes a plurality of projections (190), each projection (190) arranged to engage with a corresponding projection (192b) formed on a one of the one or more annulus fillers (32, 132), to mount the annulus filler (32, 132) to the rotor disc (24, 124).

12. The fan (13, 113) of claim 8 or claim 9, wherein:
the rotor disc (24, 124) includes a plurality of radial slots (180), extending along the axis (11);
each fan blade (26, 126) includes a root portion (182);
each root portion (182) engages with a slot (180) to couple the fan blade (26, 126) to the rotor disc (24, 124); and
the annular plate (186) closes an end (184) of the slot at the second end (30b, 130b) of the fan (13, 113).

13. A gas turbine engine (10) including a fan (13, 113) as claimed in any of claims 8 to 12.

14. The gas turbine engine (10) of claim 13, wherein the top wall (42, 142) of the annulus filler (32, 132) includes:
a first lip (62, 162) formed at the first end (30a, 130a) of the fan (13, 113); and
a second lip (64, 164) formed at the second end (30b, 130b) of the fan (13, 113),
wherein the engine (10) includes a spinner fairing or nose cone (38, 138) adjacent a first end (30a, 130a) of the fan, and a static seal (40, 140) mounted from a stationary part of the engine (10) adjacent a second end (30b, 130b) of the fan;
wherein the first lip (62, 162) extends under the spinner fairing or nose cone (38, 138); and
the second lip (64, 164) extends under the static seal (40, 140).
